# FASCICULE DE BREVET EUROPEEN

(11) **EP 0 445 690 B1**
(45) Date de publication et mention de la délivrance du brevet: **16.02.1994**
(21) Numéro de dépôt: 91103205.0
(22) Date de dépôt: 04.03.1991
(51) Int. Cl.: F04D 19/04

(54) **Pompe à vide pour vide moléculaire propre**
Vakuumpumpe für ein reines Vakuum
Vacuum pump for a clean vacuum

(30) Priorité: 07.03.1990 FR 9002866
(43) Date de publication de la demande: 11.09.1991
(73) Titulaire: ALCATEL CIT, 75008 Paris (FR)
(72) Inventeur: Lemarquand, Guy, F-74370 Villaz (FR); Perrillat-Amédé, Denis, F-74940 Annecy le Vieux (FR); Pierrejean, Didier, F-74320 Sevrier (FR)
(74) Mandataire: Weinmiller, Jürgen

(56) Documents cités:
- EP-A- 0 071 456
- DE-A- 1 750 602
- FR-A- 2 246 756

## Description

La présente invention concerne une pompe à vide pour vide moléculaire propre.

Une telle pompe est connue du document FR-A-2 246 756.

Les pompes à vide supportées magnétiquement sont particulièrement bien adaptées pour obtenir des vides très propres, c'est-à-dire exempts de toute pollution d'huile ou de poussières dues à des frottements puisqu'aucun un élément matériel ne supporte le rotor de la pompe.

Cependant, les éléments qui constituent la suspension magnétique d'un rotor ainsi que son entraînement en rotation comportent des empilages de tôles, des bobinages, des matériaux frittés et des résines qui ont l'inconvénient de dégazer sous vide. Un tel dégazage empêche d'obtenir des pressions très basses et pollue l'enceinte à vider.

Il est connu qu'un joint dynamique sépare les zones de la pompe situées dans le vide de celle comportant les organes d'entraînement en rotation et de suspension, cependant son efficacité n'est bonne qu'à grande vitesse et nulle à l'arrêt.

La présente invention a pour but de proposer une pompe à vide permettant de pallier cet inconvénient.

L'invention a ainsi pour objet une pompe à vide pour vide moléculaire propre comportant un stator et un rotor, le rotor étant entraîné en rotation par un moteur d'entraînement intégré à la pompe et étant supporté par des paliers magnétiques, le rotor étant en forme de cloche venant coiffer une protubérance interne du stator, les éléments statoriques du moteur d'entraînement et desdits paliers étant situés sur la périphérie de ladite protubérance interne et les éléments rotoriques de ces mêmes éléments étant situés sur la périphérie interne dudit rotor en forme de cloche, caractérisée en ce qu'une première chemise en matériau amagnétique et étanche recouvre ladite protubérance par dessus lesdits éléments statoriques du moteur et des paliers et en ce qu'une deuxième chemise en matériau amagnétique et étanche recouvre également dans le rotor lesdites parties rotoriques du moteur d'entraînement et desdits paliers.

On va maintenant donner la description d'un exemple de mise en oeuvre de l'invention en se référant au dessin annexé comprenant une figure unique.

Cette figure représente une pompe turbomoléculaire à ailettes comprenant un stator en deux parties 1A et 1B et un rotor 2 en forme de cloche qui vient coiffer une protubérance 3 interne à la partie 1B du stator.

Le rotor porte des ailettes rotoriques 4 et le stator porte des ailettes statoriques 5.

Le rotor 2 est entraîné en rotation autour de son axe oz par un moteur électrique du type à hystérésis comprenant un rotor 6 et un stator intérieur 7 avec son bobinage 8 monté sur la protubérance 3 de la partie 1B du stator de la pompe.

Le stator comporte une entrée d'aspiration 9 et une sortie de refoulement 10.

Le rotor 2 est supporté magnétiquement dans le stator 1A-1B au moyen de deux paliers magnétiques comportant une butée magnétique axiale passive et un palier magnétique radial actif.

La butée axiale maintient le rotor axialement selon l'axe oz et assure également sa stabilité vis-à-vis des rotations ϑₓ et ϑ_{y} autour des axes ox et oy perpendiculaires l'un à l'autre et situés dans un plan perpendiculaire à l'axe oz.

Cette butée axiale est constituée de trois paires d'aimants permanents en forme de bagues aimantées axialement, chaque paire comportant une bague rotorique et une bague statorique aimantées axialement en sens inverse l'une de l'autre comme le montrent les flèches. La première paire est composée des bagues 11A et 11B, la seconde des bagues 12A et 12B et la troisième des bagues 13A et 13B. Comme le montre la figure, chaque paire de bague est en outre également aimantée en sens inverse de sa paire adjacente (ou de ses deux paires adjacentes, pour la paire de bagues du milieu). Cette disposition permet d'augmenter l'efficacité du palier. En effet, chaque fois que deux paires de bagues sont accolées par des faces de même polarité, l'efficacité est équivalente à trois bagues identiques accolées mais aimantées dans le même sens, ou bien à une seule bague mais d'épaisseur triple. Ainsi ici, comme il y a deux fois deux paires de bagues accolées par des faces de même polarité : la première paire avec la seconde et la seconde avec la troisième, on a l'équivalent de cinq paires unitaires disposées dans le même sens. On a donc pour un même volume une plus grande efficacité.

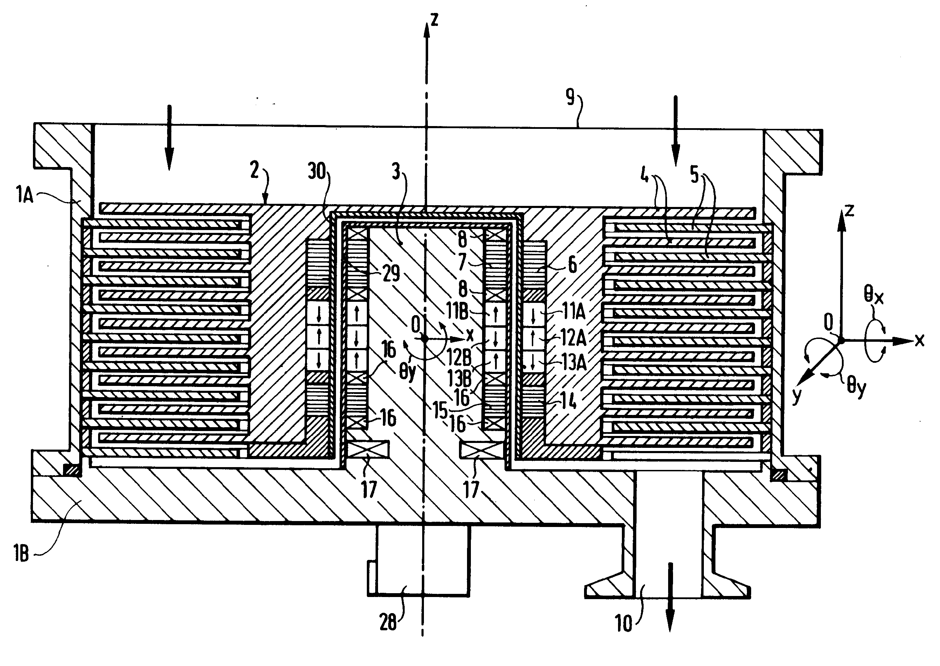

Afin que cette butée axiale soit bien stabilisante vis-à-vis des rotations ϑₓ autour de l'axe ox et ϑy autour de l'axe oy on a grand intérêt, comme c'est le cas dans la figure 1 à disposer le palier, constitué des trois paires de bagues, de façon que son centre de gravité soit confondu ou sensiblement confondu avec le centre de gravité 0 du rotor 2. Bien entendu, le nombre de paires de bagues aimantées n'est pas limité à trois et de même il pourrait n'y en avoir qu'une seule.

Le palier magnétique radial est actif et il contrôle les translations radiales selon les axes ox et oy. Il comporte un rotor 14 constitué d'un empilage de tôles électriquement isolées entre elles et isolées magnétiquement, et un stator 15 monté intérieurement sur la protubérance 3 du stator de la pompe. Ce stator comprend huit électro-aimants 16 destinés à produire les forces électromagnétiques suivant les axes ox et oy. Quatre détecteurs de position 17 permettent de mesurer la position radiale du rotor 2 suivant ces axes ox et oy.

Les électro-aimants 16 sont asservis de façon classique au moyen de deux canaux d'asservissement à partir des informations provenant des détecteurs de position 17.

Il existe un canal d'asservissement pour les électro-aimants agissant selon l'axe ox et un autre pour les électro-aimants agissant selon l'axe oy.

Les liaisons électriques sont effectuées par un connecteur électrique figuré en 28.

La pompe ne comporte pas de paliers mécaniques de secours, de manière à s'affranchir absolument de toute éventualité de pollution afin de conserver un vide parfaitement propre.

En outre et conformément à l'invention, une première chemise 29 en matériau amagnétique et étanche recouvre la protubérance 3 de la partie 1B du stator par dessus les éléments statoriques 7, 8 du moteur et 11B, 11C, 11D et 15, 16 des paliers magnétiques.

Une deuxième chemise 30 en matériau également amagnétique et étanche recouvre également les parties rotoriques 6 du moteur d'entraînement et 11A, 118, 11C et 14 des paliers magnétiques.

Ces chemises 29 et 30 sont de faible épaisseur. On peut utiliser par exemple des chemises en aluminium qui sont collées sous vide par exemple au moyen d'une résine époxy.

On peut utiliser aussi des chemises en céramique, collées sous vide.

On peut aussi réaliser ces chemises en effectuant un dépôt par évaporation sous vide, de nickel par exemple.

On obtient ainsi une excellente isolation des parties pouvant provoquer une pollution de l'enceinte à vider.

L'invention s'applique évidemment indépendamment des types de paliers magnétiques utilisés et pas uniquement dans le cas de la pompe particulière décrite comportant un palier radial actif et une butée axiale passive.

## Revendications

1. Pompe à vide pour vide moléculaire propre comportant un stator (1A, 1B) et un rotor (2), le rotor étant entraîné en rotation par un moteur d'entraînement (6, 7, 8) intégré à la pompe et étant supporté par des paliers magnétiques, le rotor étant en forme de cloche venant coiffer une protubérance (3) interne du stator, les éléments statoriques (7, 8) du moteur d'entraînement et desdits paliers (11B, 12B, 13B, 15, 16) étant situés sur la périphérie de ladite protubérance (3) interne, les éléments rotoriques (11A, 12A, 13A, 14) de ces mêmes éléments étant situés sur la périphérie interne dudit rotor (2) en forme de cloche, caractérisée en ce qu'une première chemise (29) en matériau amagnétique et étanche recouvre ladite protubérance (3) par dessus lesdits éléments statoriques du moteur et des paliers et en ce qu'une deuxième chemise (30) en matériau amagnétique et étanche recouvre également dans le rotor, lesdites parties rotoriques du moteur d'entraînement et desdits paliers.

2. Pompe à vide selon la revendication 1, caractérisée en ce que lesdites chemises sont en aluminium et sont collées sous vide.

3. Pompe à vide selon la revendication 1, caractérisée en ce que lesdites chemises sont constituées par un dépôt de nickel par évaporation sous vide.

4. Pompe à vide selon la revendication 1, caractérisée en ce que lesdites chemises sont en céramique et collées sous vide.

## Claims

1. A vacuum pump for producing a clean molecular vacuum, said vacuum pump comprising a stator (1A, 1B) and a rotor (2), the rotor being driven by a drive motor (6, 7, 8) integrated in the pump, the rotor being supported by magnetic bearings, and being bell-shaped fitting over an internal projection (3) protruding from the stator, the stator components (7, 8) of the drive motor and of said bearings (11B, 12B, 13B, 15, 16) being situated on the periphery of said internal projection (3), the rotor components (11A, 12A, 13A, 14) of the drive motor and of said bearings being situated on the internal periphery of said bell-shaped rotor (2), said vacuum pump being characterized in that a first gastight coating (29) made of non-magnetic material covers said projection (3) overlying said stator components of the motor and of the bearings, and in that similarly in the rotor a second gastight coating (30) made of non-magnetic material covers said rotor components of the drive motor and of said bearings.

2. A vacuum pump according to claim 1, characterized in that said coatings are made of aluminum and cemented in a vacuum.

3. A vacuum pump according to claim 1, characterized in that said coatings are constituted by a deposit of nickel applied by evaporation in a vacuum.

4. A vacuum pump according to claim 1, characterized in that said coatings are made of ceramic and are cemented in a vacuum.

## Patentansprüche

1. Vakuumpumpe für ein reines Molekularvakuum, mit einem Stator (1A, 1B) und einem Rotor (2), wobei der Rotor von einem in die Pumpe integrierten und von magnetischen Lagern gehaltenen Antriebsmotor (6, 7, 8) in Drehung versetzt wird und Rotor die Form einer Glocke hat, die auf einen inneren Vorsprung (3) des Stators aufgesetzt ist, wobei die Statorelemente (7, 8) des Antriebsmotors und der Lager (11B, 12B, 13B, 15, 16) sich auf der Peripherie dieses innere Vorsprungs (3) befinden und die drehenden Elemente (11A, 12A, 13A, 14) des Motors und der Lager sich auf der inneren Peripherie des glockenförmigen Rotors (2) befinden, dadurch gekennzeichnet, daß eine erste dichte Hülle (29) aus unmagnetischem Material den Vorsprung (3) über die Statorelemente des Motors und der Lager hinweg bedeckt und daß eine zweite dichte Hülle (30) aus unmagnetischem Material auch im Rotor die Rotorteile des Antriebsmotors und der Lager bedeckt.

2. Vakuumpumpe nach Anspruch 1, dadurch gekennzeichnet, daß die Hüllen aus Aluminium sind und unter Vakuum geklebt sind.

3. Vakuumpumpe nach Anspruch 1, dadurch gekennzeichnet, daß die Hüllen aus einer Schicht aus Nickel bestehen, die durch Verdampfung unter Vakuum aufgebracht ist.

4. Vakuumpumpe nach Anspruch 1, dadurch gekennzeichnet, daß die Hüllen aus Keramik sind und unter Vakuum geklebt sind.
